# EUROPEAN PATENT APPLICATION

(11) **EP 3 614 324 A1**
(43) Date of publication of application: **26.02.2020**
(21) Application number: 19199662.8
(22) Date of filing: 25.09.2019
(51) Int. Cl.: G06Q 20/32

(54) **WIRELESS TRANSACTION VIA PERSISTENT WIRELESS CONNECTION**

(30) Priority: 27.09.2018 US 201862737788 P; 06.09.2019 US 201916563577
(71) Applicant: Apple Inc., Cupertino CA 95014 (US)
(72) Inventor: KHAN, Ahmer A., Cupertino, CA California 95014 (US)
(74) Representative: Simmons & Simmons

(57) **Abstract**

A device implementing wireless transactions via persistent wireless connections includes a processor configured to establish, via near-field communication, a wireless connection with a wireless transaction device associated with a service provider, receive, from the wireless transaction device via the near-field communication, information for establishing a persistent wireless connection with the wireless transaction device via an other wireless interface, and establish, via the other wireless interface, the persistent wireless connection with the wireless transaction device. The processor is configured to receive, from the wireless transaction device via the persistent wireless connection, information pertaining to a transaction with the service provider and transmit, to the wireless transaction device, an encrypted data item comprising a credential to perform the transaction with the service provider. The processor is configured to receive, via the persistent wireless connection and from the wireless transaction device, confirmation that the transaction was completed with the service provider.

## Description

### CROSS REFERENCE TO RELATED APPLICATIONS

This application claims the benefit of priority to U.S. Provisional Patent Application No. 62/737,788 entitled "Wireless Transaction Via Persistent Wireless Connection" filed September 27, 2018, the disclosure of which is hereby incorporated herein in its entirety.

### TECHNICAL FIELD

The present description relates generally to a wireless (e.g., contactless) transaction system, including a wireless transaction system that provides wireless transactions via persistent wireless connections.

### BACKGROUND

In a wireless transaction system, an applet provisioned on a secure element of an electronic device may correspond to a credential or card account, such as a credit or debit card account. The applet may be used by the electronic device to engage in a wireless transaction with, e.g., a wireless transaction terminal, such as via near-field communication (NFC).

### BRIEF DESCRIPTION OF THE DRAWINGS

Certain features of the subject technology are set forth in the appended claims. However, for purpose of explanation, several embodiments of the subject technology are set forth in the following figures.
FIG. 1 illustrates an example network environment in which wireless transactions via persistent wireless connections may be implemented in accordance with one or more implementations.
FIG. 2 illustrates an example network environment including an example electronic device that may be used to perform wireless transactions via persistent wireless connections in accordance with one or more implementations.
FIG. 3 illustrates an example electronic device including an example secure element that may be used to perform wireless transactions via persistent wireless connections in accordance with one or more implementations.
FIG. 4 illustrates an example data flow of a wireless transaction performed via a persistent wireless connection in accordance with one or more implementations.
FIGs. 5-12 illustrate example user interfaces of an electronic device and a wireless transaction device across different stages of performing a wireless transaction via a persistent wireless connection in accordance with one or more implementations.
FIG. 13 illustrates a flow diagram of an example process of an electronic device performing a wireless transaction via a persistent wireless connection in accordance with one or more implementations.
FIG. 14 illustrates a flow diagram of an example process of a wireless transaction device performing a wireless transaction via a persistent wireless connection in accordance with one or more implementations.
FIG. 15 illustrates an example electronic system with which aspects of the subject technology may be implemented in accordance with one or more implementations.

### DETAILED DESCRIPTION

The detailed description set forth below is intended as a description of various configurations of the subject technology and is not intended to represent the only configurations in which the subject technology can be practiced. The appended drawings are incorporated herein and constitute a part of the detailed description. The detailed description includes specific details for the purpose of providing a thorough understanding of the subject technology. However, the subject technology is not limited to the specific details set forth herein and can be practiced using one or more implementations. In one or more implementations, structures and components are shown in block diagram form in order to avoid obscuring the concepts of the subject technology.

In a wireless (e.g., contactless) transaction system, a wireless device, such as, e.g., a mobile phone, may communicate with a wireless transaction device, such as a payment terminal, to conduct a wireless transaction. The wireless device may often utilize a near-field communication (NFC) connection to communicate a transaction credential (stored on the wireless device's secure element) to the wireless transaction device to perform the wireless transaction. Security for the wireless transaction may be provided by security protocols built around the wireless device's NFC controller and secure element. However, due to the transient nature of NFC connections, wireless transactions via NFC connections may often be temporally constrained and may be generally confined to providing a transaction credential to a wireless transaction device and receiving confirmation thereof.

An enhanced user experience could be provided by conducting wireless transactions through persistent wireless connections that are not temporally constrained, such as Bluetooth connections or Wi-Fi connections (e.g., Wi-Fi Aware), as opposed to transient wireless connections, such as NFC connections. For example, a wireless transaction device could communicate information regarding a wireless transaction to a wireless device before a transaction credential for the wireless transaction is provided, such as a list of items to be included in the wireless transaction. The wireless device could display the list of the items to a user, e.g., so that the user can confirm the list of items to be included in the wireless transaction before providing the transaction credential. The wireless transaction device could also provide other enriched information to the wireless device in advance of completing the wireless transaction, such as, for example, offers or discounts which could be displayed by the wireless device to the user. In addition, after the wireless transaction is completed, the wireless transaction device could provide a detailed confirmation, such as a formal receipt, to the wireless device for display to the user. However, performing wireless transactions over Bluetooth or Wi-Fi connections may not have the benefit of the security protocols built around the NFC controller and secure element of the wireless device.

The subject system allows wireless devices to conduct wireless transactions over persistent wireless connections, such as Bluetooth or Wi-Fi connections, while also providing security mechanisms to ensure that wireless transactions conducted over these persistent wireless connections are secure, e.g. without requiring any security certifications (e.g., Europay, Mastercard, and Visa (EMV) L1/L2/L3 certifications) for the wireless transaction devices. In this manner, a wireless transaction device can provide enriched information regarding a wireless transaction to a wireless device before and/or after a transaction credential is provided for the wireless transaction, such as a list of items to be included in the wireless transaction beforehand, and a formal receipt listing the items included in the wireless transaction afterwards, thereby providing an enhanced user experience when utilizing wireless transactions.

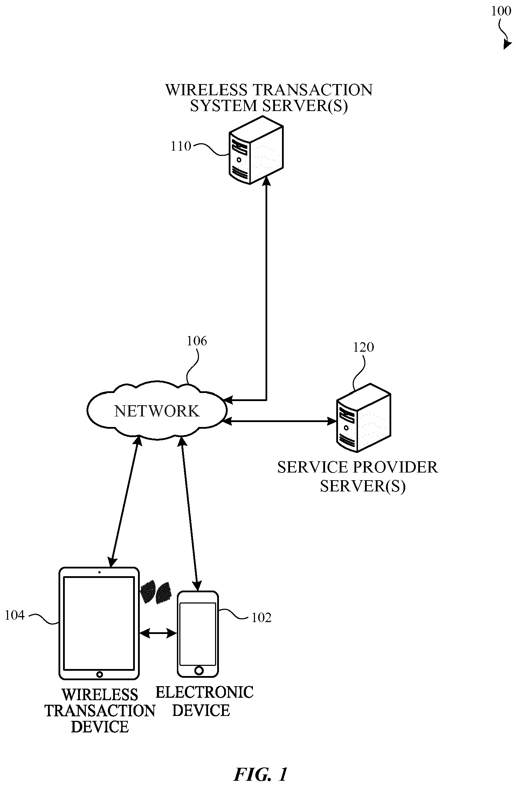

FIG. 1 illustrates an example network environment 100 in which wireless transactions via persistent wireless connections may be implemented in accordance with one or more implementations. Not all of the depicted components may be used in all implementations, however, and one or more implementations may include additional or different components than those shown in the figure. Variations in the arrangement and type of the components may be made without departing from the scope of the claims as set forth herein. Additional components, different components, or fewer components may be provided.

The network environment 100 includes an electronic device 102, a wireless transaction device 104, a network 106, one or more wireless transaction system servers 110, and one or more service provider servers 120.

The network 106 may communicatively couple, for example, the wireless transaction device 104 to the one or more service provider servers 120 and/or the one or more wireless transaction system servers 110, the electronic device 102 to the one or more wireless transaction system servers 110 and/or the one or more service provider servers 120, and the one or more wireless transaction system servers 110 to the one or more service provider servers 120.

The electronic device 102 may communicate with the wireless transaction device 104 via a direct peer-to-peer communication, such as a near field communication (NFC), Bluetooth, and/or Wi-Fi (e.g., Wi-Fi Direct, Wi-Fi Aware, etc.), that bypasses the network 106. In one or more implementations, the electronic device 102 may communicate with the wireless transaction device 104 over the network 106. In one or more implementations, the network 106 may be an interconnected network of devices that may include, or may be communicatively coupled to, a wide-area network, such as the Internet.

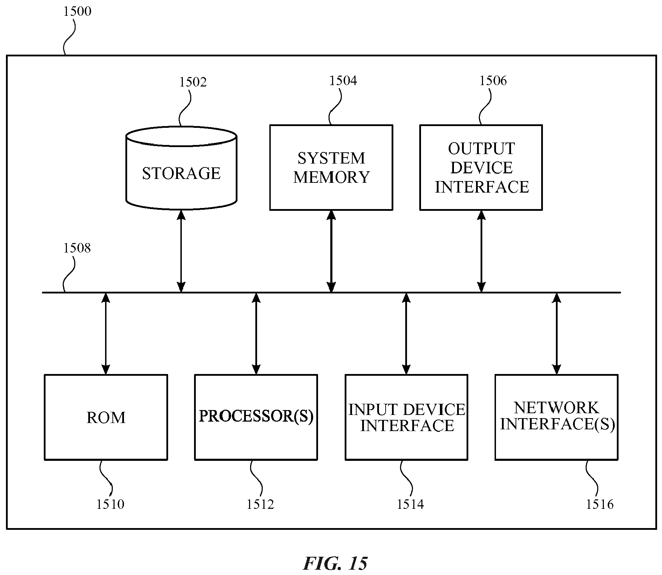

The wireless transaction device 104 may be, for example, a wireless point of sale transaction device (such as a point-of-sale terminal), a wireless transit transaction device, a wireless toll transaction device, a wireless parking meter transaction device, a wireless transaction device included in and/or coupled to an access device, such as a door, a lock, etc., a wireless transaction device included in and/or coupled to automotive/vehicle devices, and/or any device that includes one or more wireless interfaces that may be used to perform a wireless transaction, such as NFC radios, wireless local area network (WLAN) radios, Bluetooth radios, Zigbee radios, cellular radios, and/or other wireless radios. In FIG. 1, by way of example, the wireless transaction device 104 is depicted as a wireless point of sale transaction device in the form of a tablet device. In one or more implementations, the wireless transaction device 104 may not include an input device and/or output device. The wireless transaction device 104 may be, and/or may include all or part of, the electronic system discussed below with respect to FIG. 15.

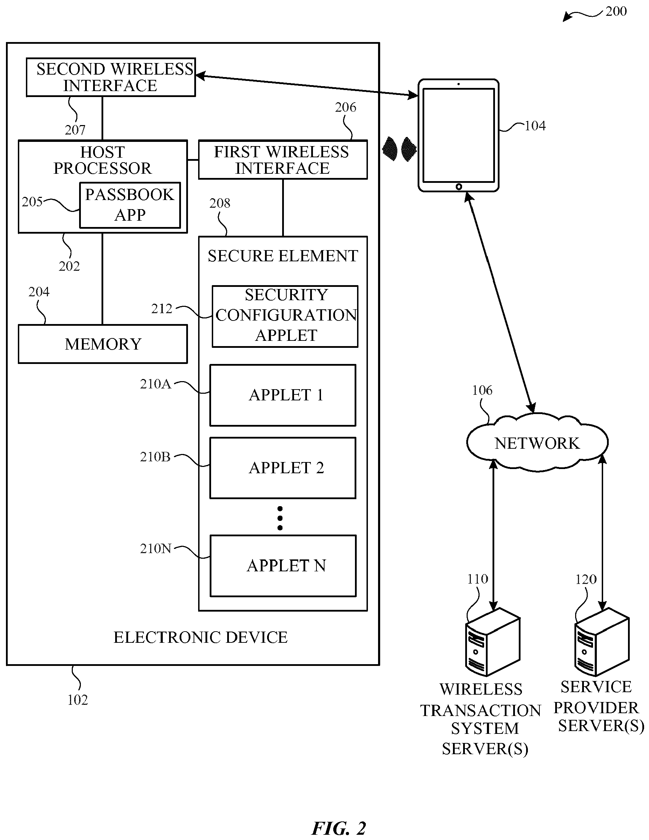

The one or more wireless transaction system servers 110 may include one or more servers that facilitate providing a wireless transaction system to the electronic device 102 in conjunction with the one or more service provider servers 120 and/or the wireless transaction device 104. As is discussed further below with respect to FIG. 2, the one or more wireless transaction system servers 110 may include one or more trusted services manager (TSM) servers, one or more broker servers, one or more application servers, and/or generally any servers that may facilitate providing a wireless transaction system. In one or more implementations, an authorized user of the electronic device 102 may have a user account with the wireless transaction system. The user accounts may be used to manage the various cards and/or credentials that the user has registered with the wireless transaction system, e.g., via the one or more wireless transaction system servers 110. The one or more wireless transaction system servers 110 may be, and/or may include all or part of, the electronic system discussed below with respect to FIG. 15.

The one or more service provider servers 120 may include one or more server devices that may be associated with one or more service providers, such as a service provider corresponding to the wireless transaction device 104. For example, the one or more service provider servers 120 may be servers corresponding to a merchant or entity associated with the wireless transaction device 104, that can complete transactions, such as payment transactions, performed through the wireless transaction device 104. In one or more implementations, an authorized user of the electronic device 102 may have a user account (e.g., a loyalty account) with one or more service providers associated with the one or more service provider servers 120. The one or more service provider servers 120 may be, and/or may include all or part of, the electronic system discussed below with respect to FIG. 15.

A service provider corresponding to one or more of the service provider servers 120 may be, for example, a merchant or retailer, a manufacturer of access devices, such as doors, locks, and the like, and/or an entity that utilizes access devices, such as a company, a school, etc., a manufacturer of vehicles, such as automotives, a ticketing service provider that provides tickets to events, a travel service provider that provides tickets for travel, such as an airlines, or generally any service provider that may utilize a wireless transaction device 104.

In one or more implementations, a service provider associated with a wireless transaction device 104 may enroll or register with the wireless payment system such that the wireless transaction device 104 can be used for performing wireless transactions via persistent wireless connections. For example, the one or more service provider servers 120 may register with the one or more wireless transaction system servers 110. The one or more wireless transaction system servers 110 may communicate with the one or more service provider servers 120 to establish a particular security or encryption key that will be used for encrypting transaction credentials transmitted to the one or more service provider servers 120.

For example, the one or more service provider servers 120 may provide a public key to the one or more wireless transaction system servers 110 that may be used by the one or more wireless transaction system servers 110 to encrypt credentials to be provided to the one or more service provider servers 120. The corresponding private key may be held by the one or more service provider servers 120 to decrypt the encrypted credentials. In one or more implementations, the one or more service provider servers 120 and the one or more wireless transaction system servers 110 may establish a symmetric key to be used to encrypt and decrypt credentials for transactions.

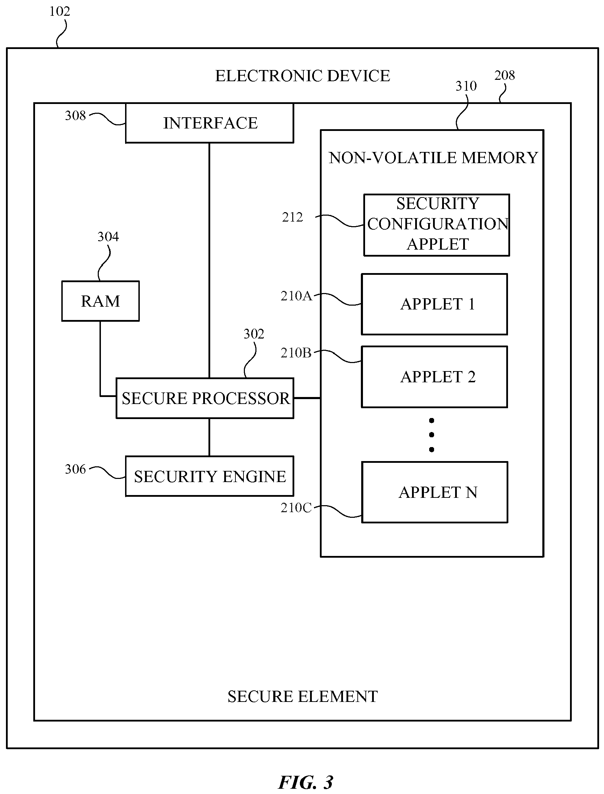

The electronic device 102 may be, for example, a portable computing device such as laptop computer, a smartphone, a peripheral device (e.g., digital cameras, headphones), a tablet device, a wearable device (e.g., a watch, a band, etc.), or any other appropriate device that includes one or more wireless interfaces, such as one or more NFC radios, WLAN radios, Bluetooth radios, Zigbee radios, cellular radios, and/or other wireless radios. In FIG. 1, by way of example, the electronic device 102 is depicted as a mobile device. The electronic device 102 may be, and/or may include all or part of, the electronic device discussed below with respect to FIGs. 2 and 3, and/or the electronic system discussed below with respect to FIG. 15.

In one or more implementations, the electronic device 102 may include a secure element onto which one or more applets may be provisioned. An example electronic device 102 that includes a secure element is discussed further below with respect to FIG. 2, and an example secure element is discussed further below with respect to FIG. 3.

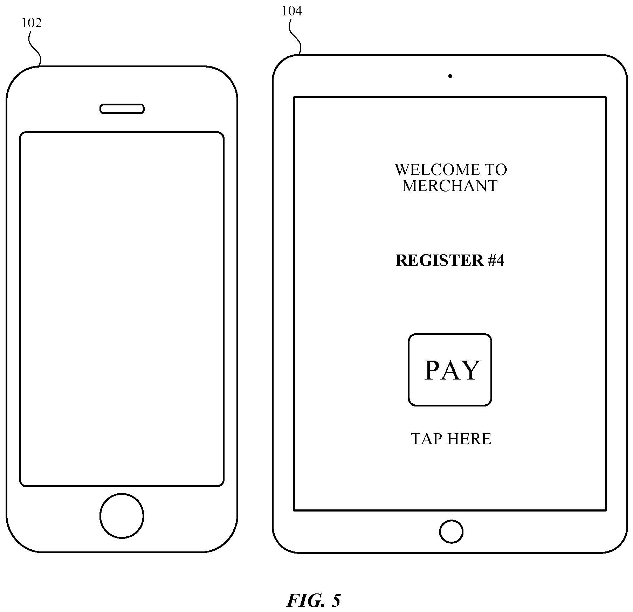

In the subject system, the electronic device 102 may establish a persistent wireless connection with the wireless transaction device 104, such as via Bluetooth or Wi-Fi Aware. The persistent wireless connection may then be used to communicate enriched information regarding a wireless transaction between the devices 102, 104, such as before and/or after a transaction credential is provided for the wireless transaction. Example user interfaces displaying such enriched information regarding a wireless transaction are discussed further below with respect to FIGs. 5-12.

The security for performing the wireless transaction over the persistent wireless connection may be provided in the subject system by having the secure element of the electronic device 102 encrypt the credential for the transaction using a security or encryption key that is specific to the one or more wireless transaction system servers 110 (e.g., an encryption key for which the corresponding decryption key is not available to the wireless transaction device 104 and/or the one or more service provider servers 120). The encryption key may be, for example, a symmetric key shared between the one or more wireless transaction system servers 110 and the secure element of the electronic device 102, and/or a public key for which the corresponding private key is held by the one or more wireless transaction system servers 110.

The electronic device 102 may provide the encrypted credential to the wireless transaction device 104 via the persistent wireless connection, and the wireless transaction device 104 may forward the encrypted credential to the one or more wireless transaction system servers 110. The one or more wireless transaction system servers 110 may decrypt the credential and then re-encrypt the credential using the encryption key established with the one or more service provider servers 120 associated with the wireless transaction device 104, e.g., when the one or more service provider servers 120 registered with the one or more wireless transaction system servers 110. The one or more wireless transaction system servers 110 may transmit the re-encrypted transaction credential back to the wireless transaction device 104, which may forward the re-encrypted transaction credential to the one or more service provider servers 120 to complete the transaction.

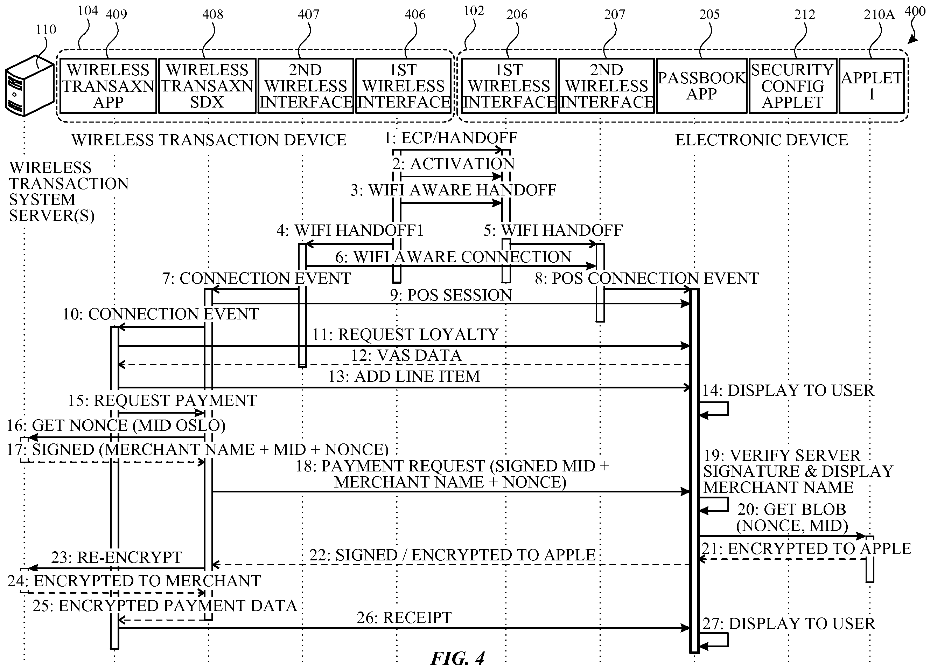

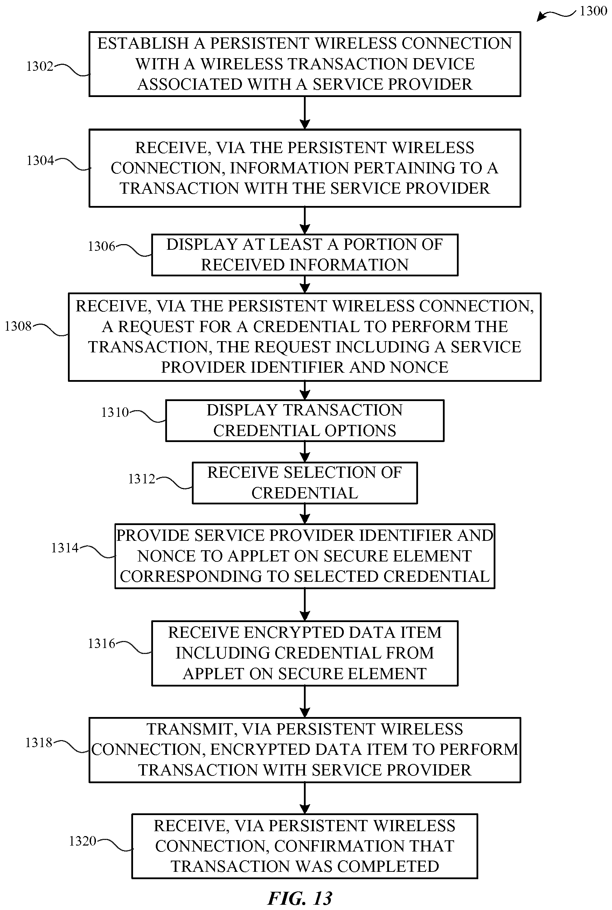

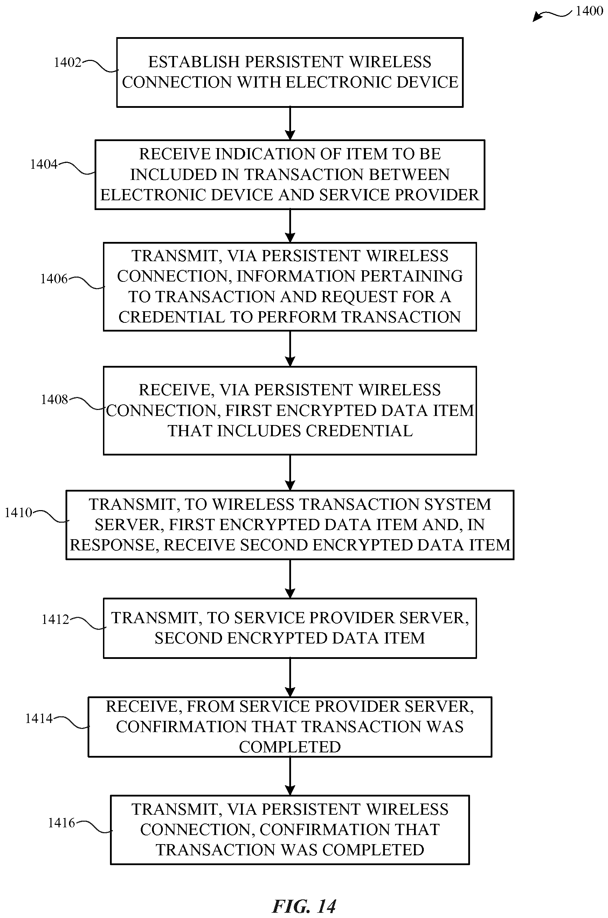

Thus, even if the security of the wireless transaction device 104 is compromised, and/or if one or more communications over the persistent wireless connection are intercepted, the security of the wireless transaction can be maintained. In this regard, the wireless transaction device 104 may not need to be EMV certified (e.g., LI, L2, or L3) in the subject system, which may decrease the implementation cost and complexity associated with performing wireless transactions. An example data flow of performing a wireless transaction via a persistent wireless connection is discussed further below with respect to FIG. 4, and example processes for performing a wireless transaction via a persistent wireless connection are discussed further below with respect to FIGS. 13 and 14.

FIG. 2 illustrates an example network environment including an example electronic device 102 that may be used to perform wireless transactions via persistent wireless connections in accordance with one or more implementations. Not all of the depicted components may be used in all implementations, however, and one or more implementations may include additional or different components than those shown in the figure. Variations in the arrangement and type of the components may be made without departing from the scope of the claims as set forth herein. Additional components, different components, or fewer components may be provided. In one or more implementations, one or more components of the example electronic device 102 may be implemented by the wireless transaction device 104.

The example network environment 200 may include the electronic device 102, the wireless transaction device 104, the network 106, the one or more wireless transaction system servers 110, and the one or more service provider servers 120. The electronic device 102 may include a host processor 202, a memory 204, a first wireless interface 206, a second wireless interface 207, and a secure element 208.

The secure element 208 may include one or more interfaces for communicatively coupling (directly or indirectly) to the first wireless interface 206 and/or the host processor 202, such as via one or more single wire protocol (SWP) connections and/or any other data connection. The secure element 208 may include a security configuration applet 212, and one or more applets 210A-N. In one or more implementations, the operating system and/or execution environment of the secure element 208 may be a JAVA-based operating system and/or JAVA-based execution environment, and the applets 210A-N, 212 may be JAVA-based applets. In other implementations, other operating systems, languages, and/or environments can be implemented. In addition to the one or more applets 210A-N, 212, the secure element 208 may also include one or more additional applets for performing other operations, such as a security applet, a registry applet, and the like.

The applets 210A-N, 212 may be provisioned on the secure element 208 in part by, for example, a trusted services manager server and/or a broker server associated with the one or more wireless transaction system servers 110. For example, a trusted services manager server and/or a broker server may transmit a provisioning script to the electronic device 102 via the network 106. In some implementations, the host processor 202 of the electronic device 102 may receive the script and may provide the script to the secure element 208, such as via the first wireless interface 206 and/or directly to the secure element 208. The secure element 208 may perform one or more security mechanisms to verify the received script, such as one or more security mechanisms inherent in the GlobalPlatform framework, and may then execute the received script.

The execution of the script by the secure element 208 may cause one or more of the applets 210A-N, 212 to be provisioned on the secure element 208. Each of the applets 210A-N may be provisioned with one or more of: an applet identifier, a device primary account number (DPAN) identifier, an identifier of the associated service provider, and/or one or more attributes. The applet identifier associated with a given applet 210A may be used by, for example, the host processor 202 and/or the trusted services manager server to uniquely identify the applet 210A relative to the other applets 210B-N provisioned on the secure element 208, such as to perform one or more operations with respect to the applet 210A, and/or to select the applet 210A for use in a wireless transaction, such as with the wireless transaction device 104.

In the instance where the attributes of a given applet 210A include a DPAN, the DPAN may be associated with a card account, such as a credit card account or debit card account, that is associated with the given applet 210A. In contrast to the DPAN, the actual number that is printed on the physical card may be referred to as a funding primary account number (FPAN). When conducting a wireless transaction (e.g., a payment) using one of the applets 210A-N, the secure element 208 may provide a credential in the form of the DPAN to the wireless transaction device 104 (e.g., without providing the FPAN which may not be stored on the secure element 208). In one or more implementations, the DPAN may be associated with a card account that is associated with a given applet 210A, but there may not be a physical card corresponding to the DPAN.

In one or more implementations, the first wireless interface 206 may be an NFC controller that may include one or more antennas and one or more transceivers for transmitting/receiving NFC communications. The first wireless interface 206 may further include one or more interfaces, such as a single wire protocol interface, for coupling to the host processor 202 and/or the secure element 208. The first wireless interface 206 may be able to communicate via one or more different NFC communication protocols, such as NFC-A (or Type A), NFC-B (or Type B), NFC-F (or Type F or FeliCA), and/or International Organization for Standardization (ISO)/International Electrotechnical Commission (IEC) 15693. The NFC-A protocol may be based on ISO/IEC 14443A and, e.g., may use Miller bit coding with a 100 percent amplitude modulation. The NFC-B protocol may be based on ISO/IEC 14443B and, e.g., may use variations of Manchester encoding along with a 10 percent modulation. The NFC-F protocol may be based on FeliCA JIS X6319-4 and, e.g., may use a slightly different variation of Manchester coding than the NFC-B protocol.

The second wireless interface 207 may be, for example, a Wi-Fi interface, a Bluetooth interface, or generally any wireless interface over which a persistent wireless connection can be established. Although the second wireless interface 207 is illustrated in FIG. 2 as only communicating with the wireless transaction device 104, the second wireless interface 207 may support concurrent connections with the wireless transaction device 104 (e.g., a Wi-Fi Aware connection) and the network 106 (e.g., a Wi-Fi Infrastructure network connection). However, as illustrated in FIG. 2, the electronic device 102 may implement the subject system even when a connection to the network 106 is not available to the electronic device 102.

In one or more implementations, the subject system may utilize the first wireless interface 206 to communicate connection information for establishing a persistent wireless connection over the second wireless interface 207. In one or more implementations, a persistent wireless connection may be established over the first wireless interface 206, e.g., without utilizing the second wireless interface 207.

The wireless transaction device 104 may include similar wireless communication capabilities as the electronic device 102. For example, the wireless transaction device 104 may include one or more antennas and/or transceivers for communicating with the electronic device 102 via one or more of an NFC-A protocol, an NFC-B protocol, an NFC-F protocol, a Bluetooth protocol, a Bluetooth low energy protocol, a Zigbee protocol, a Wi-Fi protocol, or generally any communication protocol. In one or more implementations, the wireless transaction device 104 may include a wireless reader, such as an NFC reader, and/or may support an NFC reader mode.

In one or more implementations, the wireless transaction device 104 may transmit one or more polling signals, advertisement signals, discovery signals and/or broadcast signals. The polling signals may include a polling frame, such as an enhanced polling frame. The enhanced polling frame may be detected by the electronic device 102 which may initiate a wireless transaction with the wireless transaction device 104.

The host processor 202 may include suitable logic, circuitry, and/or code that enable processing data and/or controlling operations of the electronic device 102. In this regard, the host processor 202 may be enabled to provide control signals to various other components of the electronic device 102. The host processor 202 may also control transfers of data between various portions of the electronic device 102. Additionally, the host processor 202 may enable implementation of an operating system or otherwise execute code to manage operations of the electronic device 102. The memory 204 may include suitable logic, circuitry, and/or code that enable storage of various types of information such as received data, generated data, code, and/or configuration information. The memory 204 may include, for example, random access memory (RAM), read-only memory (ROM), flash, and/or magnetic storage.

The host processor 202 may provide a wallet application 205 that provides a graphical user interface to the user and also provides a logical interface to the applets 210A-N provisioned on the secure element 208. The wallet application 205 may configure the security configuration applet 212 to implement the appropriate security for each of the applets 210A-N, such as to request user authentication when required by one or more of the applets 210A-N.

In one or more implementations, one or more of the host processor 202, the memory 204, the first wireless interface 206, the second wireless interface 207, the secure element 208, and/or one or more portions thereof, may be implemented in software (e.g., subroutines and code), may be implemented in hardware (e.g., an Application Specific Integrated Circuit (ASIC), a Field Programmable Gate Array (FPGA), a Programmable Logic Device (PLD), a controller, a state machine, gated logic, discrete hardware components, or any other suitable devices) and/or a combination of both.

FIG. 3 illustrates an example electronic device 102 including an example secure element 208 that may be used to perform wireless transactions via persistent wireless connections in accordance with one or more implementations. Not all of the depicted components may be used in all implementations, however, and one or more implementations may include additional or different components than those shown in the figure. Variations in the arrangement and type of the components may be made without departing from the scope of the claims as set forth herein. Additional components, different components, or fewer components may be provided. For explanatory purposes, the secure element 208 is illustrated as being implemented in the electronic device 102; however, the secure element 208 may be implemented in the wireless transaction device 104 and/or any other electronic device.

The secure element 208 may include, among other components, a secure processor 302, RAM 304, a security engine 306, an interface 308, and non-volatile memory 310. The RAM 304 may include one or more of static RAM (SRAM) and/or dynamic RAM (DRAM). The interface 308 may communicatively couple the security element 208 to one or more other chips in the device, such as the first wireless interface 206 and/or the host processor 202. The interface 308 may be, for example, a SWP interface, a universal serial bus (USB) interface, or generally any data interface. The secure processor 302 may be, for example, a reduced instruction set computing (RISC) processor, an advanced RISC machine (ARM) processor, or generally any processing circuitry.

The security engine 306 may perform one or more security operations for the secure element 208. For example, the security engine 306 may perform cryptographic operations and/or may manage cryptographic keys and/or certificates. In one or more implementations, the communications between the secure element 208 and an external device, such as the wireless transaction device 104 may be encrypted. For example, for NFC-F communications, an encryption key may be dynamically generated each time mutual authentication is performed. In these one or more implementations, the encryption/decryption and/or key generation/management may be performed all or in part by the security engine 306.

The non-volatile memory 310 may be and/or may include, for example, flash memory. The non-volatile memory 310 may store the attributes and executable code associated with the applets 210A-N, 212. In one or more implementations, the non-volatile memory 310 may also store firmware and/or operating system executable code that is executed by the secure processor 302 to provide the execution environment for the applets 210A-N, 212, such as a JAVA execution environment.

In one or more implementations, one or more of the secure processor 302, the RAM 304, the security engine 306, the interface 308, the non-volatile memory 310, and/or one or more portions thereof, may be implemented in software (e.g., subroutines and code), hardware (e.g., an ASIC, an FPGA, a PLD, a controller, a state machine, gated logic, discrete hardware components, or any other suitable devices) and/or a combination of both.

FIG. 4 illustrates an example data flow 400 of a wireless transaction performed via a persistent wireless connection in accordance with one or more implementations. Not all of the depicted components may be used in all implementations, however, and one or more implementations may include additional or different components than those shown in the figure. Variations in the arrangement and type of the components may be made without departing from the scope of the claims as set forth herein. Additional components, different components, or fewer components may be provided.

The data flow 400 includes the one or more wireless transaction system servers 110, the electronic device 102, and the wireless transaction device 104 which is associated with a service provider, such as a merchant. In one or more implementations, the wireless transaction device 104 may be located in a place of business associated with the service provider (or merchant). In the data flow 400, the electronic device 102 includes the first wireless interface 206, the second wireless interface 207, the wallet application 205, the security configuration applet 212, and the applet 210A, and the wireless transaction device 104 includes the first wireless interface 406, the second wireless interface 407, the wireless transaction software development kit (SDK) 408, and the wireless transaction application 409. In one or more implementations, in the data flow 400 the first wireless interfaces 206, 406 may be NFC interfaces, and the second wireless interfaces 207, 407 may be Wi-Fi or Bluetooth wireless interfaces.

In one or more implementations, the data flow 400 begins when the first wireless interface 206 of the electronic device 102 detects an enhanced polling frame (ECP) transmitted by the first wireless interface 406 of the wireless transaction device 104. For example, a user may tap the electronic device 102 on the wireless transaction device 104 and/or the electronic device 102 may otherwise be brought within a given proximity of the wireless transaction device 104. The wireless transaction device 104 may implement an NFC reader mode and may utilize an NFC Data Exchange Format (NDEF) tag to communicate connection information for handing off the transient NFC connection via the first wireless interfaces 206, 406 to a persistent Wi-Fi Aware connection via the second wireless interfaces 207, 407. Similarly, the electronic device 102 may implement NFC connection handover. In one or more implementations, the wireless transaction device 104 may communicate connection information to the electronic device 102 via the NFC connection, and the electronic device 102 may utilize the connection information to establish the Wi-Fi Aware connection.

Once the second wireless interfaces 207, 407 have established the persistent wireless connection via Wi-Fi Aware, the wireless transaction SDK 408 of the wireless transaction device 104 transmits, via the persistent wireless connection, session information for the wireless transaction to the wallet application 205 of the electronic device 102. The session information may include, for example, an identifier of the service provider associated with the wireless transaction device 104, such as an identifier of a merchant associated with the wireless transaction device 104. The wireless transaction application 409 of the wireless transaction device 104 may also request that the wallet application 205 provide any loyalty credentials associated with the service provider (e.g., merchant) that are stored on the secure element 208 (e.g., in one of the applets 210A-N) and/or are stored on the electronic device 102 outside of the secure element 208. If the secure element 208 includes any loyalty credentials associated with the service provider, the wallet application 205 may provide the loyalty credentials to the wireless transaction application 409 of the wireless transaction device 104.

The wireless transaction device 104 may receive indications of items to be included in the wireless transaction, which may be items vended (or sold) by the merchant at the place of business where the wireless transaction device 104 is located. For example, the wireless transaction device 104 may be communicatively coupled to a scanner, such as a bar code scanner, which may provide the wireless transaction device 104 with an indication of items being scanned. Alternatively, or in addition, a cashier may input items to be included in the wireless transaction via a user interface of the wireless transaction device 104, and/or items to be included in the wireless transaction may be automatically recognized, such as by computer vision. The wireless transaction application 409 of the wireless transaction device 104 may transmit an indication of each item added to the wireless transaction to the wallet application 205 of the electronic device 102 via the persistent wireless connection. The wallet application 205 may display an indication or representation of each item to the user, e.g., as the indications are received from the wireless transaction application 409 of the wireless transaction device 104.

Once all of the items to be included in the transaction have been input to the wireless transaction device 104, the wireless transaction application 409 transmits, to the wireless transaction SDK 408, a request for a credential to complete the transaction. The wireless transaction SDK 408 transmits a service provider identifier corresponding to the service provider associated with the transaction to the one or more wireless transaction system servers 110 along with a request for a nonce. The request may be transmitted to the one or more wireless transaction system servers 110 via the network 106, and separately from the persistent wireless connection with the electronic device 102.

The one or more wireless transaction system servers 110 may retrieve the name of the service provider (e.g., merchant) corresponding to the service provider identifier, may generate a nonce, and may sign a data item that includes the service provider identifier, the service provider name, and the nonce. For example, the one or more wireless transaction system servers 110 may store an association between the service provider identifier and the service provider name when the service provider registers with the one or more wireless transaction system servers 110.

The one or more wireless transaction system servers 110 may transmit the signed data item to the wireless transaction SDK 408 of the wireless transaction device 104 via the network 106. The wireless transaction SDK 408 may transmit a credential request (or payment request) including the signed data item to the wallet application 205 on the electronic device 102. The credential request may also include an indication of the total cost for the transaction. The wallet application 205 may verify that the data item was signed by the one or more wireless transaction system servers 110, such as by using a public key associated with the one or more wireless transaction system servers 110. The wallet application 205 may also display the name of the service provider along with a graphical element for the user to select a credential for completing the transaction. In one or more implementations, the user interface may also require that the user authenticate to complete the transaction, such as by providing a password, fingerprint, facial mapping, and/or the like.

Once a user selection of a credential is received, a request to obtain an encrypted data item that includes the selected credential is provided to the applet 210A corresponding to the selected credential. The request is provided with the received nonce and the service provider identifier. The applet 210A encrypts and/or signs a data item (e.g., a blob) including the credential, the nonce, and the service provider identifier, and provides the encrypted data item to the wallet application 205. The data item may be encrypted using a security or encryption key that is specific to the one or more wireless transaction system servers 110, and the encrypted data item may be signed using a private key of the electronic device 102. For example, the data item may be encrypted using a public key for which the corresponding private key is held by the one or more wireless transaction system servers 110. In one or more implementations, the credential and the nonce may be encrypted while the service provider identifier may not be encrypted.

The wallet application 205 of the electronic device 102 transmits, via the persistent wireless connection, the encrypted data item to the wireless transaction SDK 408 of the wireless transaction device 104. The wireless transaction SDK 408 of the wireless transaction device 104 forwards the encrypted data item to the one or more wireless transaction system servers 110 via the network 106 and separate from the persistent wireless connection. The one or more wireless transaction system servers 110 verify the signature of the encrypted data item, decrypt the encrypted data item, and re-encrypt the data item (e.g. containing the credential) using a security or encryption key specific to the service provider server 120 corresponding to the wireless transaction device 104. For example, the one or more wireless transaction system servers 110 may retrieve the security and/or encryption key established for the service provider identified by the service provider identifier. The one or more wireless transaction system servers 110 may transmit the re-encrypted data item (e.g., the encrypted credential) to the wireless transaction SDK 408 of the wireless transaction device 104.

The wireless transaction SDK 408 of the wireless transaction device 104 forwards the encrypted data item to the wireless transaction application 409 of the wireless transaction device 104. The wireless transaction application 409 of the wireless transaction device 104 transmits the encrypted data item to the one or more service provider servers 120 associated with the wireless transaction device 104 via the network 106 separate from the persistent wireless connection. The one or more service provider servers 120 decrypt the encrypted data item using the corresponding key and utilizes the credential to complete the transaction.

The one or more service provider servers 120 transmit a confirmation that the transaction has been completed to the wireless transaction application 409 of the wireless transaction device 104. The wireless transaction application 409 of the wireless transaction device 104 transmits a receipt for the transaction to the wallet application 205 of the electronic device 102 via the persistent wireless connection. The wallet application 205 may display the receipt to the user. In one or more implementations, after the receipt is received, the electronic device 102 may terminate the persistent wireless connection with the wireless transaction device 104.

FIGs. 5-12 illustrate example user interfaces of an electronic device and a wireless transaction device across different stages of performing a wireless transaction via a persistent wireless connection in accordance with one or more implementations. Not all of the depicted graphical elements may be used in all implementations, however, and one or more implementations may include additional or different graphical elements than those shown in the figure. Variations in the arrangement and type of the graphical elements may be made without departing from the scope of the claims as set forth herein. Additional, different, and/or fewer graphical elements may be provided.

In FIG. 5, the wireless transaction device 104 displays a user interface that provides information to assist a user with initiating a wireless transaction with the wireless transaction device 104. The electronic device 102 does not display a user interface in FIG. 5.

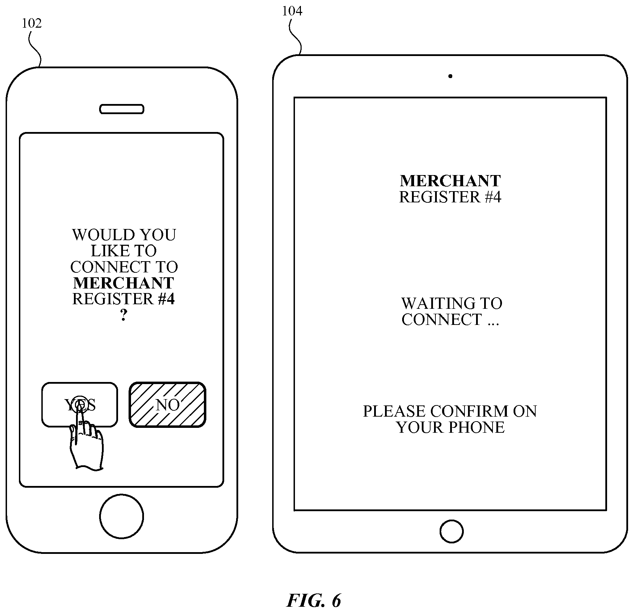

In FIG. 6, the electronic device 102 displays a user interface that prompts the user to confirm that they would like to connect the electronic device 102 to the wireless transaction device 104. The wireless transaction device 104 in FIG. 6 displays a message indicating that the wireless transaction device 104 is waiting to connect with the electronic device 102. The electronic device 102 may establish a persistent wireless connection with the wireless transaction device 104 responsive to receiving user confirmation with regard to connecting to the wireless transaction device 104.

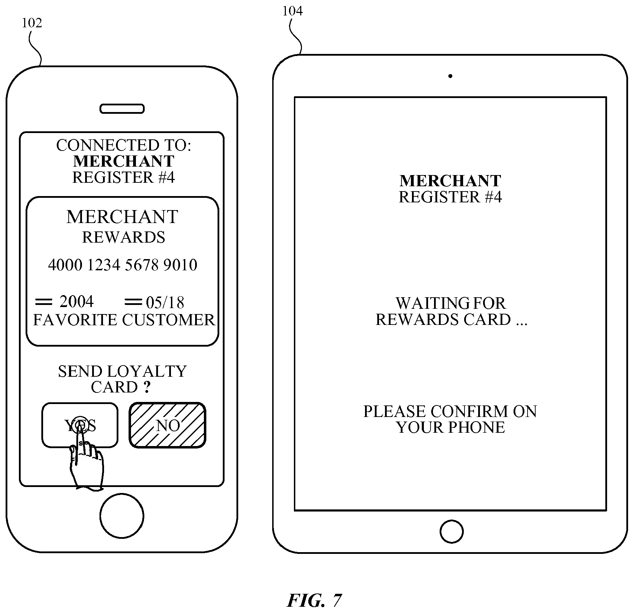

In FIG. 7, the electronic device 102 displays a user interface that prompts the user to confirm that they would like their loyalty card (or credential) for the service provider associated with the wireless transaction device 104 transmitted to the wireless transaction device 104. The wireless transaction device 104 in FIG. 7 displays a message indicating that the wireless transaction device 104 is waiting for the electronic device 102 to provide the loyalty credential. The electronic device 102 may provide the loyalty credential to the wireless transaction device 104 via the persistent wireless connection responsive to receiving user confirmation with regard to transmitting the loyalty credential.

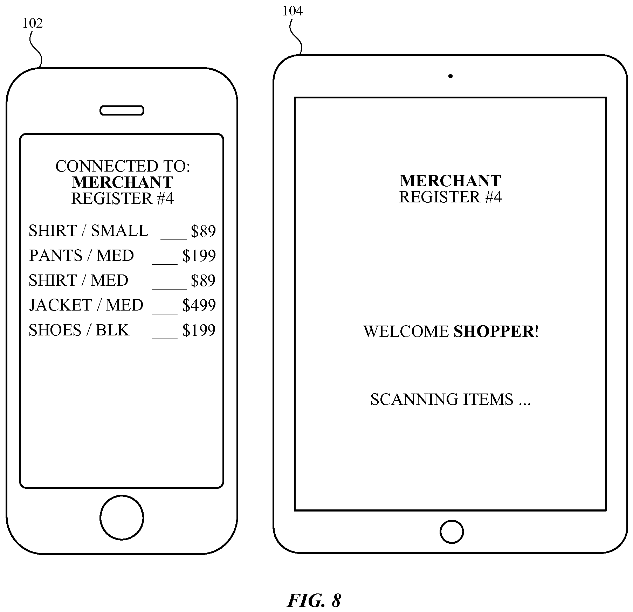

In FIG. 8, the electronic device 102 displays information pertaining to the transaction that is received from the wireless transaction device 104 via the persistent wireless connection, such as a list of items to be included in the transaction as well as prices associated with the items. The wireless transaction device 104 in FIG. 8 displays a message indicating that items for the transaction are being scanned (and/or inputted).

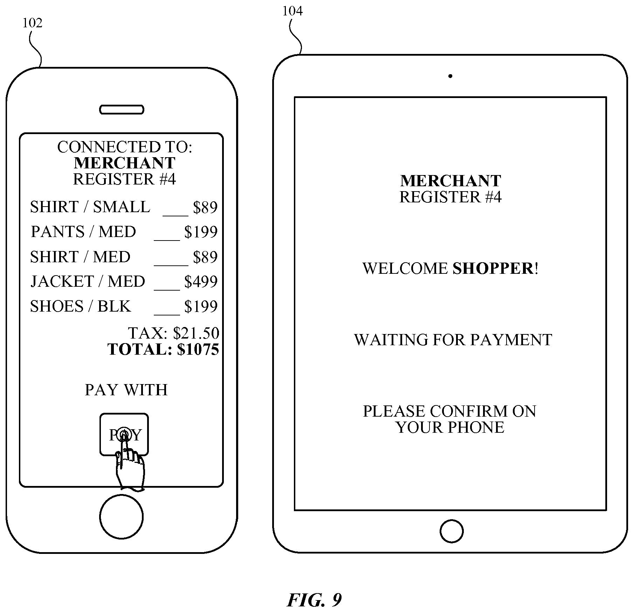

In FIG. 9, the electronic device 102 displays a user interface that prompts the user to select a credential to use to complete the transaction (e.g., to select payment information). The wireless transaction device 104 in FIG. 9 displays a message indicating that the wireless transaction device 104 is awaiting payment information.

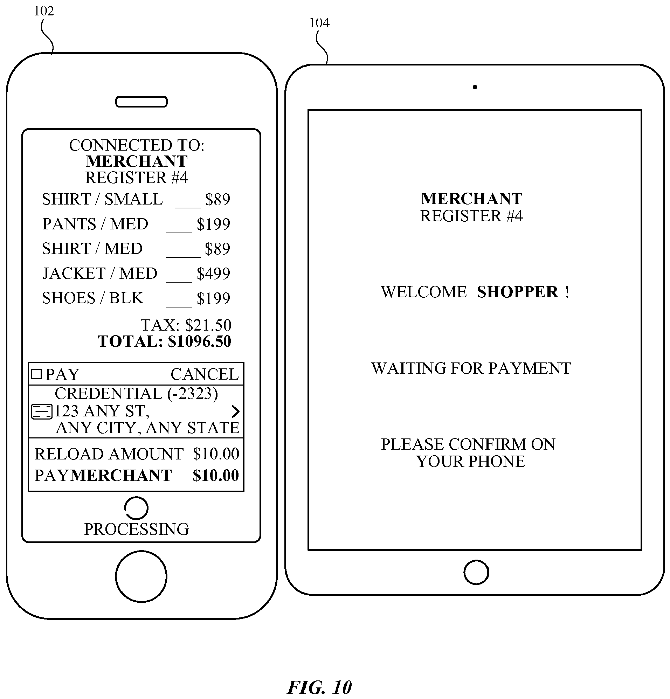

In FIG. 10, the electronic device 102 displays a user interface that indicates that a credential has been selected for payment for the transaction. The wireless transaction device 104 in FIG. 10 displays a message indicating that payment is being waited for to complete the transaction.

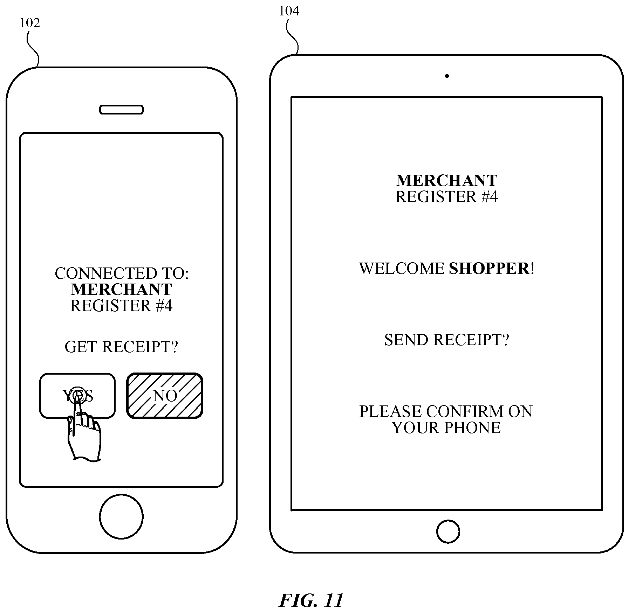

In FIG. 11, the electronic device 102 displays a user interface that prompts the user to select whether they would like to receive a receipt from the wireless transaction device 104 for the transaction, e.g., via the persistent wireless connection. The wireless transaction device 104 in FIG. 11 displays a message requesting that the user confirm on the electronic device 102 whether a receipt should be transmitted via the persistent wireless connection.

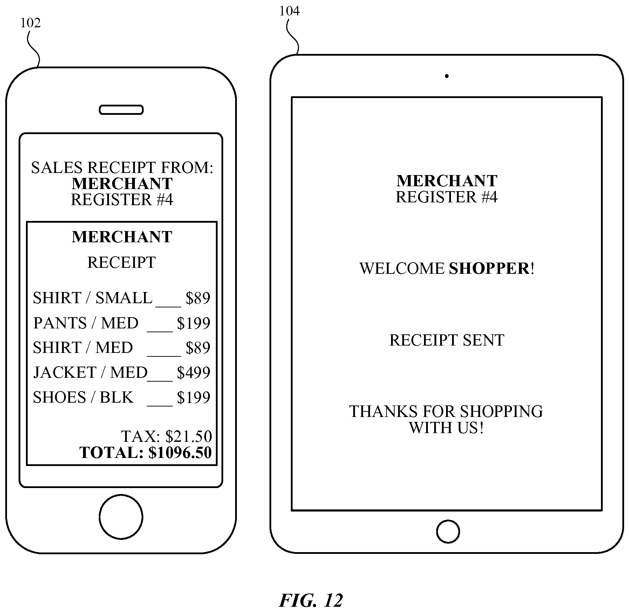

In FIG. 12, the electronic device 102 displays the receipt (e.g., received from the wireless transaction device 104 via the persistent wireless connection). The wireless transaction device 104 in FIG. 12 displays a message indicating that the receipt for the transaction has been transmitted to the electronic device 102.

FIG. 13 illustrates a flow diagram of an example process of an electronic device 102 performing a wireless transaction via a persistent wireless connection in accordance with one or more implementations. For explanatory purposes, the process 1300 is primarily described herein with reference to the electronic device 102 of Figs. 1-3. However, the electronic device 102 is presented as an exemplary device and the operations described herein may be performed by any suitable device. Further for explanatory purposes, the operations of the process 1300 are described herein as occurring in serial, or linearly. However, multiple operations of the process 1300 may occur in parallel. In addition, the operations of the process 1300 need not be performed in the order shown and/or one or more of the operations of the process 1300 need not be performed and/or can be replaced by other operations.

The process 1300 begins when the electronic device 102 establishes a persistent wireless connection with a wireless transaction device 104 associated with a service provider, such as a merchant (1302). For example, the electronic device 102 may detect an ECP transmitted by the wireless transaction device 104 via NFC, may initiate a transient NFC connection with the wireless transaction device 104 and may handoff the transient NFC connection to a persistent wireless connection, such as via Wi-Fi Aware, or via any other direct peer-to-peer wireless connection.

In one or more implementations, the wireless transaction device 104 may display a quick response (QR) code (or other indicia), the electronic device 102 may scan the QR code, such as with an image capture device (e.g., a camera), and may obtain the connection information for establishing the persistent wireless information via scanned QR code. In one or more implementations, the wireless transaction device 104 may broadcast identifying information, such as connection information, and the electronic device 102 may utilize millimeter wave (mmWave) or other high Gigahertz transmissions to determine a proximity to the wireless transaction device 104 and consequently establish the persistent wireless connection with the wireless transaction device 104 using the broadcasted connection information.

The electronic device 102 may receive, from the wireless transaction device 104 via the persistent wireless connection, information pertaining to a transaction with the service provider (1304). For example, the electronic device 102 may receive an indication of items being scanned or input to the wireless transaction device 104 for the transaction with the service provider. In one or more implementations, the information pertaining to the transaction may include, for example, offers or discounts, e.g. discounts associated with one or more items included in the transaction. The electronic device 102 may display at least a portion of the received information pertaining to the transaction (1306). For example, the electronic device 102 may display a list of items being included in the transaction, such as the list displayed by the electronic device 102 in FIG. 8.

The electronic device 102 may receive, from the wireless transaction device 104 via the persistent wireless connection, a request for a credential to perform the transaction with the service provider, the request including a service provider identifier corresponding to the service provider and a nonce (1308). The electronic device 102 may display credential options for the transaction to the user (1310), such as via the user interface displayed by the electronic device 102 in FIG. 10.

The electronic device 102 may receive a selection of a credential, such as from the user (1312), and the electronic device 102 may provide the service provider identifier and the nonce to the applet on the secure element 208 corresponding to the selected credential (1314). The electronic device 102 receives an encrypted data item including the selected credential (and the nonce) from the applet on the secure element 208 (1316), and transmits, to the wireless transaction device 104 via the persistent wireless connection, the encrypted data item (1318). In one or more implementations, when the selected credential utilizes a pin code, such as a debit card credential, the electronic device 102 may display a user interface for receiving an input of the pin code. The received pin code may then be transmitted (e.g., encrypted) to the wireless transaction device 104 via the persistent wireless connection.

The wireless transaction is subsequently completed by the wireless transaction device 104, and the electronic device 102 receives, from the wireless transaction device 104 via the persistent wireless connection, confirmation that the wireless transaction was completed (1320). In one or more implementations, the confirmation may be in the form of a receipt that the electronic device 102 may display to the user.

In one or more implementations, the persistent wireless connection with the wireless transaction device 104 may be utilized by the electronic device 102 to perform one or more additional operations or tasks. For example, wireless transaction device 104 may provide an offer for a credit card (or other credential) to the electronic device 102 via the persistent wireless connection. The electronic device 102 may provide information for applying for the credit card (or other credential) to the wireless transaction device 104 via the persistent wireless connection. In one or more implementations, the wireless transaction device 104 may request, via the persistent wireless connection, that the electronic device 102 provide additional information to complete the transaction. For example, the wireless transaction device 104 may request that the electronic device 102 provide a copy or a representation of a driver's license, such as for transactions that include items having associated age requirements. The electronic device 102 may securely provide the additional information to the wireless transaction device 104 via the persistent wireless connection.

FIG. 14 illustrates a flow diagram of an example process 1400 of a wireless transaction device 104 performing a wireless transaction via a persistent wireless connection in accordance with one or more implementations. For explanatory purposes, the process 1400 is primarily described herein with reference to the wireless transaction device 104 of FIGs. 1-2. However, the process 1400 is not limited to the wireless transaction device 104 of FIGs. 1-2, and the operations described herein may be performed by any suitable device. Further for explanatory purposes, the operations of the process 1400 are described herein as occurring in serial, or linearly. However, multiple operations of the process 1400 may occur in parallel. In addition, the operations of the process 1400 need not be performed in the order shown and/or one or more of the operations of the process 1400 need not be performed and/or can be replaced by other operations.

The process 1400 begins when the wireless transaction device 104 establishes a persistent wireless connection with the electronic device 102 (1402). The wireless transaction device 104 receives an indication of an item to be included in a transaction between the electronic device 102 and a service provider associated with the wireless transaction device 104 (1404). For example, the indication may be received in conjunction with scanning a bar code on an item being included in the transaction, by a cashier inputting the indication, or generally by any means of identifying an item to be included in the transaction. In one or more implementations, the wireless transaction device 104 may receive an indication of an item to be included in the transaction before, during, or after establishing the persistent wireless connection with the electronic device 102.

The wireless transaction device 104 transmits, to the electronic device 102 via the persistent wireless connection, information pertaining to the transaction and a request for a credential to perform the transaction (1406). For example, the wireless transaction device 104 may transmit indications of the items added to the transaction, and may transmit the request for the credential once all the items included in the transaction have been added. The wireless transaction device 104 receives, from the electronic device 102 via the persistent wireless connection, a first encrypted data item that includes the credential to perform the transaction (1408).

The wireless transaction device 104 transmits, to the one or more wireless transaction system servers 110 and via another network separate from the persistent wireless connection, the first encrypted data item that includes the credential, and receives in response, and from the one or more wireless transaction system servers 110, a second encrypted data item that includes the credential (1410). The wireless transaction device 104 transmits, to the one or more service provider servers 120 and via the other network separate from the persistent wireless connection, the second encrypted data item (1412).

The wireless transaction device 104 receives, from the one or more service provider servers 120 and via the other network separate from the persistent wireless connection, confirmation that the transaction was completed (1414). The wireless transaction device 104 transmits, to the electronic device 102 via the persistent wireless connection, confirmation that the transaction was completed (1416).

FIG. 15 illustrates an example electronic system 1500 with which aspects of the subject technology may be implemented in accordance with one or more implementations. The electronic system 1500 can be, and/or can be a part of, one or more of the electronic device 102, the wireless transaction device 104, and/or one or more of the servers 110, 120 shown in FIG. 1. The electronic system 1500 may include various types of computer readable media and interfaces for various other types of computer readable media. The electronic system 1500 includes a bus 1508, one or more processing unit(s) 1512, a system memory 1504 (and/or buffer), a ROM 1510, a permanent storage device 1502, an input device interface 1514, an output device interface 1506, and one or more network interfaces 1516, or subsets and variations thereof.

The bus 1508 collectively represents all system, peripheral, and chipset buses that communicatively connect the numerous internal devices of the electronic system 1500. In one or more implementations, the bus 1508 communicatively connects the one or more processing unit(s) 1512 with the ROM 1510, the system memory 1504, and the permanent storage device 1502. From these various memory units, the one or more processing unit(s) 1512 retrieves instructions to execute and data to process in order to execute the processes of the subject disclosure. The one or more processing unit(s) 1512 can be a single processor or a multi-core processor in different implementations.

The ROM 1510 stores static data and instructions that are needed by the one or more processing unit(s) 1512 and other modules of the electronic system 1500. The permanent storage device 1502, on the other hand, may be a read-and-write memory device. The permanent storage device 1502 may be a non-volatile memory unit that stores instructions and data even when the electronic system 1500 is off. In one or more implementations, a mass-storage device (such as a magnetic or optical disk and its corresponding disk drive) may be used as the permanent storage device 1502.

In one or more implementations, a removable storage device (such as a floppy disk, flash drive, and its corresponding disk drive) may be used as the permanent storage device 1502. Like the permanent storage device 1502, the system memory 1504 may be a read-and-write memory device. However, unlike the permanent storage device 1502, the system memory 1504 may be a volatile read-and-write memory, such as random access memory. The system memory 1504 may store any of the instructions and data that one or more processing unit(s) 1512 may need at runtime. In one or more implementations, the processes of the subject disclosure are stored in the system memory 1504, the permanent storage device 1502, and/or the ROM 1510. From these various memory units, the one or more processing unit(s) 1512 retrieves instructions to execute and data to process in order to execute the processes of one or more implementations.

The bus 1508 also connects to the input and output device interfaces 1514 and 1506. The input device interface 1514 enables a user to communicate information and select commands to the electronic system 1500. Input devices that may be used with the input device interface 1514 may include, for example, alphanumeric keyboards and pointing devices (also called "cursor control devices"). The output device interface 1506 may enable, for example, the display of images generated by electronic system 1500. Output devices that may be used with the output device interface 1506 may include, for example, printers and display devices, such as a liquid crystal display (LCD), a light emitting diode (LED) display, an organic light emitting diode (OLED) display, a flexible display, a flat panel display, a solid state display, a projector, or any other device for outputting information. One or more implementations may include devices that function as both input and output devices, such as a touchscreen. In these implementations, feedback provided to the user can be any form of sensory feedback, such as visual feedback, auditory feedback, or tactile feedback; and input from the user can be received in any form, including acoustic, speech, or tactile input.

Finally, as shown in FIG. 15, the bus 1508 also couples the electronic system 1500 to one or more networks and/or to one or more network nodes through the one or more network interface(s) 1516. In this manner, the electronic system 1500 can be a part of a network of computers (such as a LAN, a wide area network ("WAN"), or an Intranet, or a network of networks, such as the Internet. Any or all components of the electronic system 1500 can be used in conjunction with the subject disclosure.

As described above, aspects of the present technology may include the gathering and use of data available from various sources to improve the delivery to users of invitational content or any other content that may be of interest to them. The present disclosure contemplates that in some instances, this gathered data may include personal information data that uniquely identifies or can be used to contact or locate a specific person. Such personal information data can include financial data, demographic data, location-based data, telephone numbers, email addresses, social network ID's, home addresses, data or records relating to a user's health or level of fitness (e.g., vital signs measurements, medication information, exercise information), date of birth, or any other identifying or personal information.

The present disclosure recognizes that the use of such personal information data, in the present technology, can be used to the benefit of users. For example, the personal information data can be used to deliver targeted content that is of greater interest to the user. Accordingly, use of such personal information data enables users to calculated control of the delivered content. Further, other uses for personal information data that benefit the user are also contemplated by the present disclosure. For instance, health and fitness data may be used to provide insights into a user's general wellness, or may be used as positive feedback to individuals using technology to pursue wellness goals.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of, or access to, certain health data may be governed by federal and/or state laws, such as the Health Insurance Portability and Accountability Act (HIPAA); whereas health data in other countries may be subject to other regulations and policies and should be handled accordingly. Hence different privacy practices should be maintained for different personal data types in each country.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case of advertisement delivery services, the present technology can be configured to allow users to select to "opt in" or "opt out" of participation in the collection of personal information data during registration for services or anytime thereafter. In another example, users can select not to provide mood-associated data for targeted content delivery services. In yet another example, users can select to limit the length of time mood-associated data is maintained or entirely prohibit the development of a baseline mood profile. In addition to providing "opt in" and "opt out" options, the present disclosure contemplates providing notifications relating to the access or use of personal information. For instance, a user may be notified upon downloading an app that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing specific identifiers (e.g., date of birth, etc.), controlling the amount or specificity of data stored (e.g., collecting location data a city level rather than at an address level), controlling how data is stored (e.g., aggregating data across users), and/or other methods.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, content can be selected and delivered to users by inferring preferences based on non-personal information data or a bare minimum amount of personal information, such as the content being requested by the device associated with a user, other non-personal information available to the content delivery services, or publicly available information.

Implementations within the scope of the present disclosure can be partially or entirely realized using a tangible computer-readable storage medium (or multiple tangible computer-readable storage media of one or more types) encoding one or more instructions. The tangible computer-readable storage medium also can be non-transitory in nature.

The computer-readable storage medium can be any storage medium that can be read, written, or otherwise accessed by a general purpose or special purpose computing device, including any processing electronics and/or processing circuitry capable of executing instructions. For example, without limitation, the computer-readable medium can include any volatile semiconductor memory, such as RAM, DRAM, SRAM, T-RAM, Z-RAM, and TTRAM. The computer-readable medium also can include any non-volatile semiconductor memory, such as ROM, PROM, EPROM, EEPROM, NVRAM, flash, nvSRAM, FeRAM, FeTRAM, MRAM, PRAM, CBRAM, SONOS, RRAM, NRAM, racetrack memory, FJG, and Millipede memory.

Further, the computer-readable storage medium can include any non-semiconductor memory, such as optical disk storage, magnetic disk storage, magnetic tape, other magnetic storage devices, or any other medium capable of storing one or more instructions. In one or more implementations, the tangible computer-readable storage medium can be directly coupled to a computing device, while in other implementations, the tangible computer-readable storage medium can be indirectly coupled to a computing device, e.g., via one or more wired connections, one or more wireless connections, or any combination thereof.

Instructions can be directly executable or can be used to develop executable instructions. For example, instructions can be realized as executable or non-executable machine code or as instructions in a high-level language that can be compiled to produce executable or non-executable machine code. Further, instructions also can be realized as or can include data. Computer-executable instructions also can be organized in any format, including routines, subroutines, programs, data structures, objects, modules, applications, applets, functions, etc. As recognized by those of skill in the art, details including, but not limited to, the number, structure, sequence, and organization of instructions can vary significantly without varying the underlying logic, function, processing, and output.

While the above discussion primarily refers to microprocessor or multi-core processors that execute software, one or more implementations are performed by one or more integrated circuits, such as ASICs or FPGAs. In one or more implementations, such integrated circuits execute instructions that are stored on the circuit itself.

Those of skill in the art would appreciate that the various illustrative blocks, modules, elements, components, methods, and algorithms described herein may be implemented as electronic hardware, computer software, or combinations of both. To illustrate this interchangeability of hardware and software, various illustrative blocks, modules, elements, components, methods, and algorithms have been described above generally in terms of their functionality. Whether such functionality is implemented as hardware or software depends upon the particular application and design constraints imposed on the overall system. Skilled artisans may implement the described functionality in varying ways for each particular application. Various components and blocks may be arranged differently (e.g., arranged in a different order, or partitioned in a different way) all without departing from the scope of the subject technology.

It is understood that any specific order or hierarchy of blocks in the processes disclosed is an illustration of example approaches. Based upon design preferences, it is understood that the specific order or hierarchy of blocks in the processes may be rearranged, or that all illustrated blocks be performed. Any of the blocks may be performed simultaneously. In one or more implementations, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

As used in this specification and any claims of this application, the terms "base station", "receiver", "computer", "server", "processor", and "memory" all refer to electronic or other technological devices. These terms exclude people or groups of people. For the purposes of the specification, the terms "display" or "displaying" means displaying on an electronic device.

As used herein, the phrase "at least one of' preceding a series of items, with the term "and" or "or" to separate any of the items, modifies the list as a whole, rather than each member of the list (i.e., each item). The phrase "at least one of' does not require selection of at least one of each item listed; rather, the phrase allows a meaning that includes at least one of any one of the items, and/or at least one of any combination of the items, and/or at least one of each of the items. By way of example, the phrases "at least one of A, B, and C" or "at least one of A, B, or C" each refer to only A, only B, or only C; any combination of A, B, and C; and/or at least one of each of A, B, and C.

The predicate words "configured to", "operable to", and "programmed to" do not imply any particular tangible or intangible modification of a subject, but, rather, are intended to be used interchangeably. In one or more implementations, a processor configured to monitor and control an operation or a component may also mean the processor being programmed to monitor and control the operation or the processor being operable to monitor and control the operation. Likewise, a processor configured to execute code can be construed as a processor programmed to execute code or operable to execute code.

Phrases such as an aspect, the aspect, another aspect, some aspects, one or more aspects, an implementation, the implementation, another implementation, some implementations, one or more implementations, an embodiment, the embodiment, another embodiment, some embodiments, one or more embodiments, a configuration, the configuration, another configuration, some configurations, one or more configurations, the subject technology, the disclosure, the present disclosure, other variations thereof and alike are for convenience and do not imply that a disclosure relating to such phrase(s) is essential to the subject technology or that such disclosure applies to all configurations of the subject technology. A disclosure relating to such phrase(s) may apply to all configurations, or one or more configurations. A disclosure relating to such phrase(s) may provide one or more examples. A phrase such as an aspect or some aspects may refer to one or more aspects and vice versa, and this applies similarly to other foregoing phrases.

The word "exemplary" is used herein to mean "serving as an example, instance, or illustration". Any embodiment described herein as "exemplary" or as an "example" is not necessarily to be construed as preferred or advantageous over other embodiments. Furthermore, to the extent that the term "include", "have", or the like is used in the description or the claims, such term is intended to be inclusive in a manner similar to the term "comprise" as "comprise" is interpreted when employed as a transitional word in a claim.

All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. No claim element is to be construed under the provisions of 35 U.S.C. § 112(f), unless the element is expressly recited using the phrase "means for" or, in the case of a method claim, the element is recited using the phrase "step for".

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but are to be accorded the full scope consistent with the language claims, wherein reference to an element in the singular is not intended to mean "one and only one" unless specifically so stated, but rather "one or more". Unless specifically stated otherwise, the term "some" refers to one or more. Pronouns in the masculine (e.g., his) include the feminine and neuter gender (e.g., her and its) and vice versa. Headings and subheadings, if any, are used for convenience only and do not limit the subject disclosure.

Additional aspects are set out in the following numbered clauses:
1. A device comprising:
   a memory; and
   at least one processor configured to:
      establish, via a near-field communication interface, a transient wireless connection with a wireless transaction device associated with a service provider;
      receive, from the wireless transaction device via the near-field communication interface,
      connection information for establishing a persistent wireless connection with the wireless transaction device via an other wireless interface;
      establish, via the other wireless interface, the persistent wireless connection with the wireless transaction device based at least in part on the connection information;
      receive, from the wireless transaction device via the persistent wireless connection, information pertaining to a transaction with the service provider;
      transmit, to the wireless transaction device via the persistent wireless connection, an encrypted data item comprising a credential to perform the transaction with the service provider; and
      receive, via the persistent wireless connection and from the wireless transaction device,
      confirmation that the transaction was completed with the service provider.
2. The device of clause 1, wherein the at least one processor is further configured to:
   terminate the persistent wireless connection in response to receipt, from the wireless transaction device, of the confirmation that the transaction was completed with the service provider.
3. The device of clause 2, wherein the other wireless interface comprises at least one of a Bluetooth or Wi-Fi interface.
4. The device of clause 1, further comprising an image capture device configured to scan a code displayed on the wireless transaction device, wherein the at least one processor is further configured to:
   obtain, based at least in part on the scanned code, connection information for establishing the persistent wireless connection with the wireless transaction device; and
   establish the persistent wireless connection with the wireless transaction device based at least in part on the connection information.
5. The device of clause 1, wherein the service provider comprises a merchant, the wireless transaction device is located in a place of business associated with the merchant, and the information pertaining to the transaction with the service provider comprises: information associated with at least one item vended by the merchant at the place of business and a total cost associated with the transaction.
6. The device of clause 5, wherein the at least one processor is further configured to:
   display the information associated with at least one item vended by the merchant at the place of business and the total cost associated with the transaction.
7. The device of clause 6, wherein the confirmation that the transaction was completed comprises a receipt for the transaction with the merchant, the receipt listing the at least one item vended by the merchant at the place of business.
8. The device of clause 7, wherein the at least one processor is further configured to:
   display the receipt for the transaction with the merchant.
9. The device of clause 5, wherein the at least one processor is further configured to:
   receive, from the wireless transaction device via the persistent wireless connection, a request for a credential associated with the merchant; and
   transmit, to the wireless transaction device via the persistent wireless connection, the credential associated with the merchant.
10. The device of clause 1, wherein the information pertaining to the transaction with the service provider comprises a service provider identifier of the service provider, and the encrypted data item comprises the service provider identifier.
11. The device of clause 10, wherein the information pertaining to the transaction with the service provider further comprises a nonce, the device further comprises a secure element, and the at least one processor is further configured to:
   provide the service provider identifier and the nonce to the secure element; and
   receive, from the secure element, the encrypted data item, the encrypted data item comprising the credential, the service provider identifier, and the nonce, and the encrypted data item being encrypted using an encryption key associated with a third party server that is separate from the service provider.
12. A method comprising:
   establishing, by a wireless transaction device, a persistent wireless connection with a wireless device;
   receiving, independent of the persistent wireless connection with the wireless device, an indication of at least one item to be included in a transaction between the wireless device and a service provider;
   transmitting, to the wireless device via the persistent wireless connection, a request for a credential to perform the transaction with the service provider, the request comprising an indication of the at least one item;
   receiving, from the wireless device via the persistent wireless connection, an encrypted data item comprising the credential to perform the transaction, the encrypted data item being encrypted with an encryption key associated with a third party;
   transmitting, to a server corresponding to the third party via an other network connection that is separate from the persistent wireless connection, the encrypted data item;
   receiving, from the server corresponding to the third party via the other network connection, an other encrypted data item comprising the credential, the other encrypted data item being encrypted with an other encryption key associated with the service provider;
   transmitting, to a server corresponding to the service provider via the other network connection,
   the other encrypted data item;
   receiving, from the server corresponding to the service provider via the other network connection,
   confirmation that the transaction was completed; and
   transmitting, to the wireless device via the persistent wireless connection, the confirmation that the transaction was completed.
13. The method of clause 12, wherein the persistent wireless connection comprises a direct peer-to-peer wireless connection and the other network connection comprises a wide-area network connection.
14. The method of clause 13, wherein the persistent wireless connection and the other network connection concurrently coexist on a same wireless interface.
15. The method of clause 12, wherein the indication of the at least one item to be included in the transaction is received prior to establishing the persistent wireless connection with the wireless device.
16. The method of clause 12, wherein the indication of the at least one item to be included in the transaction is received after or while establishing the persistent wireless connection with the wireless device.
17. The method of clause 12, wherein service provider comprises a merchant, the wireless transaction device is located in a place of business associated with the merchant, and the at least one item to be included in the transaction between the wireless device and the service provider comprises an item being vended from the place of business associated with the merchant.
18. The method of clause 17, wherein the indication of the at least one item to be included in the transaction is received via input provided at the place of business associated with the merchant.
19. A system comprising:
   a wireless transaction device comprising a first memory and at least one first processor, the at least one first processor configured to:
      establish a persistent wireless connection with a wireless device;
      receive, independent of the persistent wireless connection, an indication of at least one item to be included in a transaction between the wireless device and a service provider;
      transmit, to the wireless device via the persistent wireless connection, information pertaining to the transaction with the service provider and a request for a credential to perform the transaction;
      receive, from the wireless device via the persistent wireless connection, a first encrypted data item comprising the credential to perform the transaction;
      transmit, to a wireless transaction system server, the first encrypted data item comprising the credential and receive, from the wireless transaction system server, a second encrypted data item comprising the credential, the second encrypted data item being different than the first encrypted data item;
      transmit, to a service provider server separate from the wireless transaction system server, the second encrypted data item, and receive, from the service provider server, confirmation that the transaction was completed; and
      transmit, to the wireless device via the persistent wireless connection, the confirmation that the transaction was completed; and
      the wireless device comprising a second memory and at least one second processor, the at least one second processor configured to:
         establish the persistent wireless connection with the wireless transaction device;
         receive, from the wireless transaction device via the persistent wireless connection, the information pertaining to the transaction with the service provider and the request for the credential to perform the transaction;
         transmit, to the wireless transaction device via the persistent wireless connection, the first encrypted data item comprising the credential to perform the transaction, the first encrypted data item encrypted using a first encryption key associated with the service provider server; and
         receive, via the persistent wireless connection, the confirmation that the transaction was completed.
20. The system of clause 19, further comprising:
   the wireless transaction system server comprising a third memory and at least one third processor, the at least one third processor configured to: receive, from the wireless transaction device, the first encrypted data item, decrypt the first encrypted data item using the first encryption key to obtain a data item, encrypt the data item using a second encryption key associated with the service provider server to form the second encrypted data item, and transmit, to the wireless transaction device, the second encrypted data item, wherein the first and second encryption keys are unavailable to the wireless transaction device; and
   the service provider server comprising a fourth memory and at least one fourth processor, the at least one fourth processor configured to: receive, from the wireless transaction device, the second encrypted data item, decrypt the second encrypted data item to obtain the credential, perform the transaction using the credential, and transmit, to the wireless transaction device, the confirmation that the transaction was completed.

## Claims

1. A device comprising:
a memory; and
at least one processor configured to:
establish, via a near-field communication interface, a transient wireless connection with a wireless transaction device associated with a service provider;
receive, from the wireless transaction device via the near-field communication interface, connection information for establishing a persistent wireless connection with the wireless transaction device via an other wireless interface;
establish, via the other wireless interface, the persistent wireless connection with the wireless transaction device based at least in part on the connection information;
receive, from the wireless transaction device via the persistent wireless connection, information pertaining to a transaction with the service provider;
transmit, to the wireless transaction device via the persistent wireless connection, an encrypted data item comprising a credential to perform the transaction with the service provider; and
receive, via the persistent wireless connection and from the wireless transaction device, confirmation that the transaction was completed with the service provider.

2. The device of claim 1, wherein the at least one processor is further configured to:
terminate the persistent wireless connection in response to receipt, from the wireless transaction device, of the confirmation that the transaction was completed with the service provider.

3. The device of any of claims 1 or 2, further comprising an image capture device configured to scan a code displayed on the wireless transaction device, wherein the at least one processor is further configured to:
obtain, based at least in part on the scanned code, connection information for establishing the persistent wireless connection with the wireless transaction device; and
establish the persistent wireless connection with the wireless transaction device based at least in part on the connection information.

4. The device of any of preceding claim, wherein the service provider comprises a merchant, the wireless transaction device is located in a place of business associated with the merchant, and the information pertaining to the transaction with the service provider comprises:
information associated with at least one item vended by the merchant at the place of business and a total cost associated with the transaction.

5. The device of claim 4, wherein the at least one processor is further configured to:
display the information associated with at least one item vended by the merchant at the place of business and the total cost associated with the transaction.

6. The device of claim 5, wherein the confirmation that the transaction was completed comprises a receipt for the transaction with the merchant, the receipt listing the at least one item vended by the merchant at the place of business and the at least one processor is further configured to: display the receipt for the transaction with the merchant.

7. The device of claim 4, wherein the at least one processor is further configured to:
receive, from the wireless transaction device via the persistent wireless connection, a request for a credential associated with the merchant; and
transmit, to the wireless transaction device via the persistent wireless connection, the credential associated with the merchant.

8. The device of any preceding claim, wherein the information pertaining to the transaction with the service provider comprises a service provider identifier of the service provider, and the encrypted data item comprises the service provider identifier.

9. The device of claim 8, wherein the information pertaining to the transaction with the service provider further comprises a nonce, the device further comprises a secure element, and the at least one processor is further configured to:
provide the service provider identifier and the nonce to the secure element; and
receive, from the secure element, the encrypted data item, the encrypted data item comprising the credential, the service provider identifier, and the nonce, and the encrypted data item being encrypted using an encryption key associated with a third party server that is separate from the service provider.

10. A method comprising:
establishing, by a wireless transaction device, a persistent wireless connection with a wireless device;
receiving, independent of the persistent wireless connection with the wireless device, an indication of at least one item to be included in a transaction between the wireless device and a service provider;
transmitting, to the wireless device via the persistent wireless connection, a request for a credential to perform the transaction with the service provider, the request comprising an indication of the at least one item;
receiving, from the wireless device via the persistent wireless connection, an encrypted data item comprising the credential to perform the transaction, the encrypted data item being encrypted with an encryption key associated with a third party;
transmitting, to a server corresponding to the third party via an other network connection that is separate from the persistent wireless connection, the encrypted data item;
receiving, from the server corresponding to the third party via the other network connection, an other encrypted data item comprising the credential, the other encrypted data item being encrypted with an other encryption key associated with the service provider;
transmitting, to a server corresponding to the service provider via the other network connection, the other encrypted data item;
receiving, from the server corresponding to the service provider via the other network connection, confirmation that the transaction was completed; and
transmitting, to the wireless device via the persistent wireless connection, the confirmation that the transaction was completed.

11. The method of claim 10, wherein the persistent wireless connection comprises a direct peer-to-peer wireless connection, the other network connection comprises a wide-area network connection, and the persistent wireless connection and the other network connection concurrently coexist on a same wireless interface.

12. The method of any of claims 10 or 11, wherein the indication of the at least one item to be included in the transaction is received prior to establishing the persistent wireless connection with the wireless device.

13. The method of any of claims 10 to 12, wherein the indication of the at least one item to be included in the transaction is received after or while establishing the persistent wireless connection with the wireless device.

14. The method of any of claims 10 to 13, wherein service provider comprises a merchant, the wireless transaction device is located in a place of business associated with the merchant, and the indication of the at least one item to be included in the transaction between the wireless device and the service provider is received via input provided at the place of business associated with the merchant.

15. A system comprising:
a wireless transaction device comprising a first memory and at least one first processor, the at least one first processor configured to:
establish a persistent wireless connection with a wireless device;
receive, independent of the persistent wireless connection, an indication of at least one item to be included in a transaction between the wireless device and a service provider;
transmit, to the wireless device via the persistent wireless connection, information pertaining to the transaction with the service provider and a request for a credential to perform the transaction;
receive, from the wireless device via the persistent wireless connection, a first encrypted data item comprising the credential to perform the transaction;
transmit, to a wireless transaction system server, the first encrypted data item comprising the credential and receive, from the wireless transaction system server, a second encrypted data item comprising the credential, the second encrypted data item being different than the first encrypted data item;
transmit, to a service provider server separate from the wireless transaction system server, the second encrypted data item, and receive, from the service provider server, confirmation that the transaction was completed; and
transmit, to the wireless device via the persistent wireless connection, the confirmation that the transaction was completed; and
the wireless device comprising a second memory and at least one second processor, the at least one second processor configured to:
establish the persistent wireless connection with the wireless transaction device;
receive, from the wireless transaction device via the persistent wireless connection, the information pertaining to the transaction with the service provider and the request for the credential to perform the transaction;
transmit, to the wireless transaction device via the persistent wireless connection, the first encrypted data item comprising the credential to perform the transaction, the first encrypted data item encrypted using a first encryption key associated with the service provider server; and
receive, via the persistent wireless connection, the confirmation that the transaction was completed.
